# EUROPÄISCHE PATENTSCHRIFT

(11) **EP 3 622 321 B1**
(45) Veröffentlichungstag und Bekanntmachung des Hinweises auf die Patenterteilung: **06.04.2022**
(21) Anmeldenummer: 18723794.6
(22) Anmeldetag: 07.05.2018
(51) Int. Cl.: G01S 15/93, G01S 7/00, G01S 7/52, G08C 19/16, G01S 7/40, G01S 13/93

(54) **SENSOR ZUM AUSSENDEN VON SIGNALEN UND ZUM EMPFANGEN REFLEKTIERTER ECHOSIGNALE SOWIE SYSTEM UMFASSEND EIN STEUERGERÄT UND EINEN SOLCHEN SENSOR**
SENSOR FOR EMISSION OF SIGNALS AND FOR RECEPTION OF REFLECTIVE ECHO SIGNALS AS WELL AS SYSTEM COMPRISING A CONTROL UNIT AND SAID SENSOR
CAPTEUR POUR ÉMISSION DES SIGNAUX ET POUR RÉCEPTION DES SIGNAUX ÉCHOS REFLÉCTÉS ET SYSTÈME COMPRENANT UN APPAREIL DE CONTRÔLE ET UN TEL CAPTEUR

(30) Priorität: 08.05.2017 DE 102017207680
(43) Veröffentlichungstag der Anmeldung: 18.03.2020
(73) Patentinhaber: Robert Bosch GmbH, 70442 Stuttgart (DE)
(72) Erfinder: KLOTZ, Albrecht, 71229 Leonberg (DE); TREPTOW, Thomas, 71229 Leonberg (DE); SCHMID, Dirk, 75397 Simmozheim (DE); SCHUMANN, Michael, 70597 Stuttgart (DE)
(86) Internationale Anmeldenummer: PCT/EP2018/061647
(87) Internationale Veröffentlichungsnummer: WO 2018/206477

(56) Entgegenhaltungen:
- DE-A1-102011 121 092
- DE-A1-102014 110 187
- DE-A1-102015 109 155
- Kent Lennartsson: "Comparing CAN FD with Classical CAN", , 12. Oktober 2016 (2016-10-12), XP055495349, Gefunden im Internet: URL:https://www.kvaser.com/wp-content/uplo ads/2016/10/comparing-can-fd-with-classica l-can.pdf [gefunden am 2018-07-25]

## Beschreibung

Die Erfindung betrifft einen Sensor umfassend mindestens einen Wandler zum Aussenden von Signalen und zum Empfangen reflektierter Echosignale, der eingerichtet ist, ein analoges Messsignal auszugeben, einen Analog/Digitalwandler zum Umwandeln des analogen Messsignals in ein digitales Messsignal, eine Auswerteinheit zum Auswerten des digitalen Messsignals und eine Kommunikationseinheit zum Übertragen eines Ergebnisses der Auswertung über eine digitale Kommunikationsschnittstelle. Ein weiterer Aspekt der Erfindung betrifft ein System umfassend ein Steuergerät und einen solchen Sensor, wobei das Steuergerät und der mindestens eine Sensor über eine digitale Kommunikationsschnittstelle miteinander in Verbindung stehen.

### Stand der Technik

Moderne Fahrzeuge weisen eine Vielzahl von Sensoren auf, über die Informationen über die Umgebung des Fahrzeugs gewonnen werden. Um einen sicheren Betrieb der Fahrzeugsysteme zu gewährleisten, die sich auf die gewonnenen Daten verlassen, ist es wünschenswert, die verwendeten Sensoren auch nach ihrem Einbau in das Fahrzeug überprüfen zu können.

Aus DE 10 2011 121 092 A1 ist ein Ultraschallsensor für ein Kraftfahrzeug bekannt, der mit einem Kommunikationsanschluss an eine Datenleitung des Kraftfahrzeugs ausgestattet ist. Der Sensor ist in einen Testmodus schaltbar und dazu eingerichtet, in dem Testmodus das Testsignal an dem Kommunikationsanschluss unter Umgehung der üblichen Kommunikationseinheit auszugeben. Dabei wird ausgenutzt, dass die Ultraschallsensoren über eine Vielzahl von internen Ports, sogenannten Debug-Ports, verfügen, über welche verschiedene Signale des Sensors in der Fertigung abgegriffen werden können, darunter eine abgelegte Schwellwertkurve, das Empfangssignal des Sensors oder das Profil einer Empfangsverstärkung. Die Ports sind intern im Sensor verfügbar, so dass sie ohne dessen Beschädigung im verbauten Zustand nicht mehr erreichbar sind. Über den Kommunikationsanschluss des Sensors werden die Testsignale ohne Umwandlung in das Kommunikationsprotokoll ausgegeben. Die im Stand der Technik bekannten Lösungen erfordern für eine Überprüfung des Sensors das Bereitstellen weiterer Diagnosetechnik, um die vom Sensor im Testmodus ausgegebenen analogen Signale auszuwerten.

Aus der DE 102011121092 A1 ist ein Sensor für ein Kraftfahrzeug bekannt, mit einem Kommunikationsanschluss zum Anschließen des Sensors an eine Datenleitung des Kraftfahrzeugs, und mit einer Kommunikationseinheit, die dazu ausgelegt ist, ein von dem Sensor erfasstes Sensorsignal in ein mit einem vorbestimmten Kommunikationsprotokoll konformes Kommunikationssignal umzuwandeln und dieses Kommunikationssignal über den Kommunikationsanschluss auszugeben, so dass über den Kommunikationsanschluss eine digitale Datenkommunikation zwischen dem Sensor und einem Steuergerät des Kraftfahrzeugs gemäß dem Kommunikationsprotokoll durchführbar ist, wobei der Sensor in einen Testmodus schaltbar und dazu eingerichtet ist, in dem Testmodus ein Testsignal auszugeben, wobei der Sensor dazu eingerichtet ist, in dem Testmodus das Testsignal unter Umgehung der Kommunikationseinheit an dem Kommunikationsanschluss auszugeben.

Aus der DE 102009049067 A1 sind bereits ein Verfahren und eine Vorrichtung zur verbesserten Ultraschall-Laufzeitdifferenzmessung bekannt. Die DE 102010044991 A1 offenbart ein Verfahren zum Übertragen von Daten zwischen einem Sensor und zumindest einer weiteren elektronischen Komponente in einem Kraftfahrzeug sowie eine Sensorvorrichtung. Weitere relevanten Sensoren sind aus DE102015109155 oder DE102014110187 bekannt.

### Offenbarung der Erfindung

Es wird ein Sensor vorgeschlagen, der mindestens einen Wandler zum Aussenden von Signalen und zum Empfangen reflektierter Echosignale umfasst, wobei der Wandler eingerichtet ist, ein analoges Messsignal auszugeben. Der Sensor umfasst ferner einen Analog/Digitalwandler zum Umwandeln des analogen Messsignals in ein digitales Messsignal, eine Auswerteinheit zum Auswerten des digitalen Messsignals und eine Kommunikationseinheit zum Übertragen eines von der Auswerteinheit erzeugten Messergebnisses über eine digitale Kommunikationsschnittstelle. Die Kommunikationseinheit ist eingerichtet, über die digitale Kommunikationsschnittstelle eine Anforderung für Diagnosedaten zu empfangen und ist ferner eingerichtet, den Sensor in einen Diagnosebetrieb zu schalten und angeforderte Diagnosedaten über die digitale Kommunikationsschnittstelle zu übertragen. Dabei ist die Kommunikationseinheit eingerichtet, über die digitale Kommunikationsschnittstelle mit mindestens zwei verschiedenen Datenraten zu kommunizieren, wobei zur Übertragung der Diagnosedaten im Diagnosebetrieb eine höhere Datenrate verwendet wird als für eine Übertragung des Messergebnisses in einem Normalbetrieb des Sensors.

Der vorgeschlagene Sensor umfasst neben dem Wandler auch die Elektronik, die zur Ansteuerung des Wandlers erforderlich ist, die Elektronik, die zur Auswertung der empfangenen Messsignale erforderlich ist, sowie die notwendigen Komponenten, um das Messergebnis digital über eine digitale Kommunikationsschnittstelle übertragen zu können. Derartige digitale Kommunikationsschnittstellen sind beispielsweise als Bussysteme ausgeführt, wobei im Zusammenhang mit Fahrzeugen, beispielsweise der LIN-Bus (Local Interconnect Network) sowie der CAN-Bus (Controller Area Network) typischerweise eingesetzt werden. Bei diesen Datenbussen kann mit unterschiedlichen Datenraten kommuniziert werden.

In einem Normalbetrieb des Sensors werden lediglich die Messergebnisse über die digitale Kommunikationsschnittstelle übertragen. Das Messergebnis kann beispielsweise eine Wertetabelle sein, die angibt, in welchen Entfernungen der Sensor Objekte oder Hindernisse erkannt hat. Diese Wertetabelle weist im Vergleich mit beispielsweise dem digitalen Messsignal, welche die Ausgangsbasis für die digitale Auswertung durch die Auswerteinheit darstellt, nur ein sehr geringes Datenvolumen auf, so dass auch bei einer geringen Datenrate eine Übertragung des Messergebnisses über die digitale Kommunikationsschnittstelle schnell abgeschlossen werden kann. Ein Betrieb der Kommunikationsschnittstelle mit einer höheren Datenrate, der in der Regel mit einem erhöhten Energiebedarf und einer erhöhten Störanfälligkeit einhergeht, ist somit im Normalbetrieb nicht erforderlich.

In dem Diagnosebetrieb des Sensors ist vorgesehen, dass abhängig von einer Anforderung Diagnosedaten ausgewählt werden und über die digitale Kommunikationsschnittstelle übertragen werden. Hierdurch erhöht sich die über die digitale Kommunikationsschnittstelle zu übertragene Datenmenge erheblich. Daher ist vorgesehen, die digitale Kommunikationsschnittstelle bei Betrieb des Sensors im Diagnosebetrieb mit einer höheren Datenrate zu betreiben. Hierdurch können auch größere Datenmengen übertragen werden und/oder die übertragenen Daten können häufiger aktualisiert werden.

In einer erfindungsgemäßen Variante umfassen die Diagnosedaten das digitale Messsignal. Des Weiteren können die Diagnosedaten zusätzlich oder alternativ eine Hüllkurve des digitalen Messsignals und/oder eine I/Q Demodulation des digitalen Messsignals umfassen. Das digitale Messsignal ist der Ausgangspunkt für die nachfolgende digitale Auswertung und stellt die früheste digitale Zugriffsmöglichkeit auf die vom Sensor empfangenen Signale dar. Das vom Wandler direkt bereitgestellte analoge Messsignal ist ohne eine Analog/Digitalwandlung nicht für eine Übertragung über die digitale Kommunikationsschnittstelle geeignet. Eine Hüllkurve des digitalen Messsignals kann beispielsweise durch Gleichrichten und Glätten des digitalen Messsignals erhalten werden.

In einer erfindungsgemäßen Variante wird das digitale Messsignal durch die Auswerteinheit mit einem Filter bearbeitet. Bevorzugt umfassen dann die Diagnosedaten ein gefiltertes digitales Messsignal.

In einer erfindungsgemäßen Variante ist die Auswerteinheit eingerichtet, das digitale Messsignal mit einem Referenzsignal zu korrelieren, wobei ein korreliertes Signal erzeugt wird. In diesem Fall umfassen die Diagnosedaten bevorzugt Daten, die aus dem Referenzsignal, der Amplitude des korrelierten Signals, einem Maß der Übereinstimmung der Phasenlagen zwischen Referenzsignal und digitalen Messsignal oder einer Kombination mindestens zweier dieser Daten ausgewählt sind.

Bevorzugt ist die Auswerteinheit eingerichtet, lokale Maxima in dem digitalen Messsignal, in einem korrelierten Signal oder in einem gefilterten digitalen Messsignal zu erkennen, wobei die Diagnosedaten Parameter zu den erkannten Maxima umfassen. Diese Parameter sind beispielsweise ausgewählt aus der dem erkannten Maxima zugeordneten Amplitude, Phase, Zeit oder eine Kombination mindestens zweier dieser Parameter.

Bevorzugt umfassen die Diagnosedaten Sensorparameter. Des Weiteren ist die Kommunikationseinheit bevorzugt eingerichtet, Konfigurationsdaten zu empfangen und abhängig von den Konfigurationsdaten Sensorparameter zu konfigurieren. Bevorzugt sind die Sensorparameter ausgewählt aus einer Verstärkungskurve, einer Schwellwertkurve, einer Sendefrequenz, einer Sendewellenform, einer Samplerate des Analog/Digitalwandlers, einer Samplerate des Digital/Analogwandlers, Parametern des Filters oder einer Kombination mindestens zweier dieser Sensorparameter.

Die Verstärkungskurve beschreibt, wie das vom Wandler ausgegebene analoge Messsignal vor und/oder nach der Analog/Digitalwandlung verstärkt wird. Dabei kann insbesondere ein analoger Verstärker vorgesehen sein, der das vom Wandler ausgegebene analoge Messsignal vor der Analog/Digitalwandlung verstärkt. Die Verstärkungskurve kann insbesondere auch zeitabhängig sein.

Dadurch ist es beispielsweise möglich, ein empfangenes Echosignal abhängig von der seit dem Aussenden des Signals verstrichene Zeitspanne unterschiedlich stark zu verstärken.

Eine Schwellwertkurve kann beispielsweise als ein Kriterium vorgegeben werden, um in dem empfangenen Echosignal Anteile des Echosignals zu bestimmen, die von einer Reflexion des ausgesandten Signals an einem Hindernis stammen. Dabei kann insbesondere vorgesehen sein, dass bei Erkennen einer Amplitude des digitalen Messsignals oberhalb der Schwellwertkurve auf das Vorliegen eines Hindernisses geschlossen wird. Dabei kann insbesondere auch vorgesehen sein, dass die Schwellwertkurve zeitabhängig ist, das heißt der durch die Schwellwertkurve vorgegebene Schwellwert ist abhängig von der Zeit, die seit dem Aussenden des Signals verstrichen ist.

Über die Sensorparameter Sendefrequenz und/oder Sendewellenform kann das durch den Wandler ausgesandte Signal beeinflusst werden. Dabei kann die Sendewellenform beliebig gewählt werden, wobei als einfachste Sendewellenform ein sinusförmiges Signal vorgegeben werden kann. In diesem Fall stellt die Sendefrequenz die Frequenz des Sinussignals dar.

Weitere Sensorparameter können Betriebsparameter des Analog/Digitalwandlers betreffen, wie insbesondere die Samplerate. Die Samplerate gibt an, wie häufig durch den Analog/Digitalwandler das analoge Messsignal abgetastet wird, um das digitale Messsignal zu erzeugen.

Bevorzugt ist die digitale Kommunikationsschnittstelle als CAN-Bus, PSI5 (Peripheral Sensor Interface 5) Interface, Punkt-zu-Punkt Verbindung oder LIN Bus oder LIN-Bus ausgestaltet. Eine Punkt-zu-Punkt Verbindung kann dabei insbesondere basierend auf einem der angegebenen Bus-Typen aufgebaut werden. Dementsprechend ist die Kommunikationseinheit des Sensors eingerichtet, über die entsprechende Kommunikationsschnittstelle zu kommunizieren.

Bei Ausführung der digitalen Kommunikationsschnittstelle als CAN-Bus kann beispielsweise eine niedrige Datenrate von 125 kbit/s im Normalbetrieb und eine erhöhte Datenrate von 1 Mbit/s zur Übermittlung von Diagnosedaten verwendet werden.

Bevorzugt ist der Sensor als Ultraschallsensor oder als Radarsensor ausgebildet. Ist der Sensor als Ultraschallsensor ausgebildet, so handelt es sich bei dem Wandler um einen Schallwandler, der zum Aussenden von Schallsignalen eingerichtet ist und umgekehrt zum Empfangen von Schallsignalen in Form von Echos eingerichtet ist.

Ein weiterer Aspekt der Erfindung ist es ein System umfassend ein Steuergerät und mindestens einen Sensor bereitzustellen. Der Sensor ist bevorzugt wie beschrieben ausgebildet und sowohl das Steuergerät als auch der mindestens eine Sensor stehen über eine digitale Kommunikationsschnittstelle miteinander in Verbindung. Das Steuergerät ist dabei eingerichtet, Diagnosedaten von dem mindestens einen Sensor anzufordern und auszuwerten.

Das Steuergerät ist insbesondere eingerichtet, über die digitale Kommunikationsschnittstelle mit verschiedenen Datenraten zu kommunizieren, wobei zur Übertragung von Diagnosedaten, die ein Sensor im Diagnosebetrieb überträgt, eine höhere Datenrate verwendet wird als für das Empfangen von Daten, insbesondere von Messergebnissen, in einem Normalbetrieb des mindestens einen Sensors.

Zur Diagnose von Problemen des Sensors können insbesondere Referenzdaten in dem Steuergerät hinterlegt sein und das Steuergerät kann insbesondere dazu ausgebildet sein, empfangene Diagnosedaten mit den hinterlegten Referenzdaten zu vergleichen und bei Erkennen von Abweichungen auf einen Fehler des Sensors zu schließen.

### Vorteile der Erfindung

Der erfindungsgemäße Sensor sowie das erfindungsgemäß System sind eingerichtet, nicht nur fertig verarbeitete Messergebnisse, sondern auch Zwischenergebnisse, die beispielsweise in Form eines digitalen Messsignals, eines gefilterten digitalen Messsignals oder als korreliertes Signal vorliegen, in einen Diagnosebetrieb von einem Sensor zu einem Steuergerät zu übertragen, so dass das Verhalten des Sensors überprüft werden kann. Da sich durch das Übertragen der Diagnosedaten die übertragene Datenmenge erhöht, ist vorteilhafterweise vorgesehen, bei der Übertragung der Diagnosedaten in dem Diagnosebetrieb eine höhere Datenrate zu verwenden als bei der Übertragung von Messergebnissen in einem Normalbetrieb des Sensors.

Das Übertragen einer höheren Datenrate bedingt jedoch einen höheren Energiebedarf sowie in der Regel auch eine höhere Störanfälligkeit bei der Datenübertragung. Vorteilhafterweise wird bei dem erfindungsgemäßen Sensor sowie bei dem erfindungsgemäßen System die hohe Datenübertragungsrate nur dann verwendet, wenn aufgrund der durch die Diagnosedaten erhöhten Datenmenge eine höhere Übertragungskapazität benötigt wird.

Gegenüber der aus dem Stand der Technik bekannten Ausgabe von analogen Messwerten an den Kommunikationsschnittstellen des Sensors weist die vorgeschlagene Lösung den Vorteil auf, dass keine zusätzlichen Komponenten zur Auswertung erforderlich sind. Externe Analog/Digitalwandler zur Erfassung von analogen Testsignalen sind nicht erforderlich. Vorteilhafterweise wird die gleiche Infrastruktur in Form der digitalen Kommunikationsschnittstelle für das Übertragen der Diagnosedaten genutzt, wie für das Übertragen der Messergebnisse im Normalbetrieb des Sensors. Somit sind bei der Verkabelung und bei den Anschlüssen des Sensors keinerlei zusätzlichen Maßnahmen erforderlich.

Vorteilhafter Weise müsste auch bei einem Steuergerät, welches zusätzlich eine Diagnose eines Sensors ermöglichen soll, keine baulichen Änderungen vorgenommen werden. Die Diagnosedaten können über die gleiche digitale Kommunikationsschnittstelle empfangen werden und können anschließend digital im Steuergerät ausgewertet werden. Da in der Regel ohnehin in den Steuergeräten Prozessoren oder Mikrocontroller vorhanden sind, müssen hierzu keine weiteren Komponenten vorgehalten werden.

Eine Diagnose der Funktion eines Sensors ist unter Verwendung der vorgeschlagenen Sensors bzw. Systems schnell und einfach möglich.

### Kurze Beschreibung der Figuren

Ein Ausführungsbeispiel der Erfindung ist in den Zeichnungen dargestellt und in der nachfolgenden Beschreibung näher erläutert.

Es zeigen:
- Figur 1: eine schematische Darstellung eines Sensors und
- Figur 2: eine schematische Darstellung eines Fahrzeug mit einem System umfassend ein Steuergerät und zwei Sensoren.

### Ausführungsformen der Erfindung

In der nachfolgenden Beschreibung der Ausführungsbeispiele der Erfindung werden gleiche Komponenten und Elemente mit gleichen Bezugszeichen bezeichnet, wobei auf eine wiederholte Beschreibung dieser Komponenten oder Elementen in Einzelfällen verzichtet wird. Die Figuren stellen den Gegenstand der Erfindung nur schematisch dar.

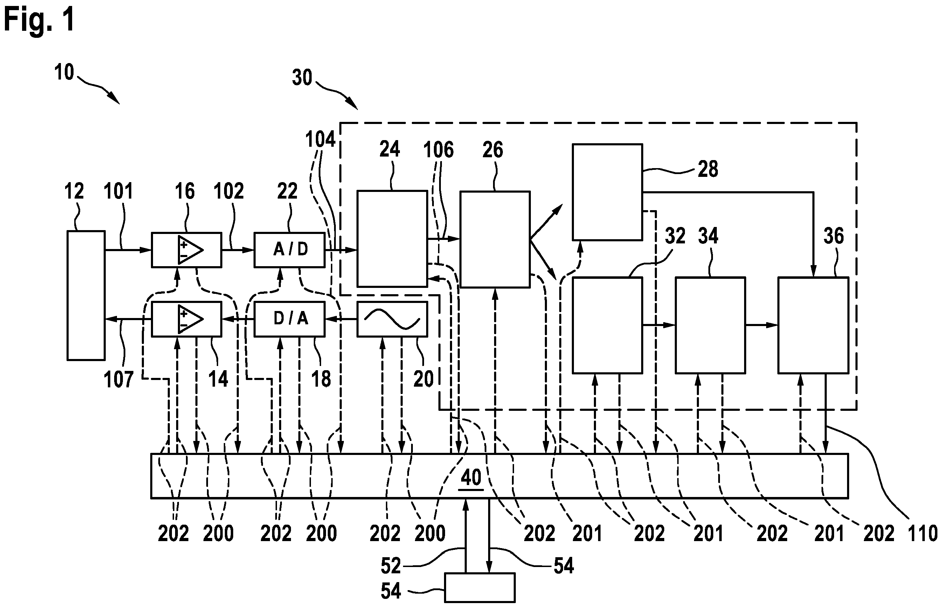

Figur 1 zeigt einen Sensor 10, welcher einen Wandler 12, eine Auswerteinheit 30 und eine Kommunikationseinheit 40 umfasst.

Der Wandler 12 ist eingerichtet, bei Beaufschlagung mit einem analogen Sendesignal 107 ein Signal auszusenden. Im Fall eines als Ultraschallsensor ausgebildeten Sensors 10 ist der Wandler 12 ein Schallwandler, so dass dieser bei Beaufschlagung mit dem analogen Sendesignal 107 ein Schallsignal aussendet. Zur Generierung des analogen Sendesignals 107 umfasst der Sensor 10 einen Signalgenerator 20, einen Digital/Analogwandler 18 sowie einen Sendeverstärker 14. Durch den Signalgenerator 20 wird eine digitale Sendewellenform generiert, die in digitaler Form an den Digital/Analogwandler 18 übergeben wird. Dieser erzeugt darauf ein analoges Signal, welches nach Verstärkung durch den Sendeverstärker 14 als das analoge Sendesignal 107 ausgegeben wird.

Durch den Wandler 12 werden empfangene Signale in Form eines analogen Messsignals 101 ausgegeben. Für eine Verarbeitung in der Auswerteinheit 30 ist es jedoch erforderlich, dass das analoge Messsignal 101 vorher in ein digitales Messsignal 104 gewandelt wird. Hierzu sind zwischen dem Wandler 12 und der Auswerteinheit 30 ein Vorverstärker 16 sowie ein Analog/Digitalwandler 22 angeordnet. Das analoge Messsignal 101 wird vom Vorverstärker 16 vorverstärkt und aufbereitet und in Form eines verstärkten analogen Messsignals 102 an den Analog/Digitalwandler 22 übergeben. Nach der Wandlung wird das digitale Messsignal 104 an die Auswerteinheit 30 übergeben.

In dem in Figur 1 dargestellten Ausführungsbeispiel umfasst die Auswerteinheit 30 ein digitales Filter 24, ein Schwellwertfilter 28, eine Recheneinheit 32, einen Echodetektor 34 sowie eine Echoauswahleinheit 36. Das digitale Filter 24 kann beispielsweise als ein Optimalfilter oder auch Matched-Filter ausgestaltet sein. Dabei wird eine grundsätzlich bekannte Struktur eines erwartenden Empfangssignals verwendet, um Nutzsignale vom Rauschen zu trennen. Von dem digitalen Filter 24 wird anschließend ein gefiltertes digitales Messsignal 106 an eine Verteileinheit 26 übergeben. Dort wird das gefilterte digitale Messsignal 106 an den Schwellwertfilter 28 sowie an die Recheneinheit 32 übergeben. In dem Schwellwertfilter 28 kann beispielsweise das gefilterte digitale Messsignal 106 mit einem Schwellwert verglichen werden, wobei Signale mit einer Amplitude unterhalb des Schwellwerts verworfen werden. Die nicht verworfenen Signale werden an die Echoauswahleinheit 36 übermittelt.

In der Recheneinheit 32 wird das gefilterte digitale Messsignal 106 normiert und es wird der Korrelationskoeffizient als Funktion der Zeit berechnet. Die Ergebnisse der Recheneinheit 32 werden an den Echodetektor 34 übergeben. In dem Echodetektor 34 werden in den aufbereiteten Ergebnissen diejenigen Signalanteile herausgesucht, die von einer Reflexion eines Hindernisses oder eines Objekts stammen. Die Ergebnisse des Echodetektors 34 werden anschließend an eine Echoauswahleinheit 36 übergeben.

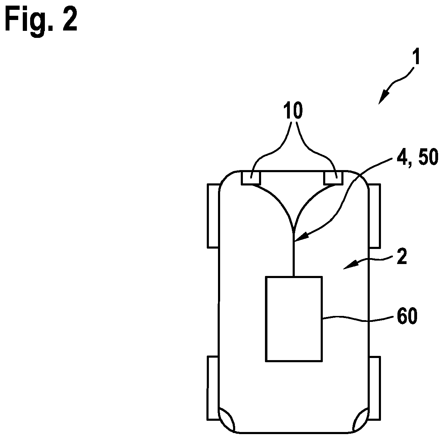

Durch die Echoauswahleinheit 36 werden die als Messergebnis 110 zu übermittelnden Daten ausgewählt und gegebenenfalls erfolgt hier auch eine Formatierung der Messergebnisse 110, so dass diese dem Format entsprechen, welches ein Steuergerät, vergleiche Figur 2, erwartet. Des Weiteren werden von der Echoauswahleinheit 36 doppelte Echos, also Echos, die sowohl durch den Echodetektor 34 als auch durch den Schwellwertfilter 28 ermittelt wurden, zusammengeführt, so dass nur ein Messergebnis übermittelt wird.

Das Messergebnis 110 wird anschließend an die Kommunikationseinheit 40 übergeben. Wie der Darstellung in Figur 1 entnommen werden kann, steht die Kommunikationseinheit 40 nicht nur mit der Echoauswahleinheit 36 in Verbindung, sondern verfügt ebenfalls über Verbindungen zu allen weiteren Komponenten der Auswerteinheit 30 sowie zu dem Signalgenerator 20, dem Analog/Digitalwandler 22, dem Vorverstärker 16, dem Digital/Analogwandler 18 und dem Sendeverstärker 14.

Über diese zusätzlichen Verbindungen ist es der Kommunikationseinheit 40 möglich, bei Empfang einer Anforderung 52 Diagnosedaten 54 zusammenzustellen und über eine digitale Kommunikationsschnittstelle zu versenden. Die digitale Kommunikationsschnittstelle wird dabei nicht nur in einem Diagnosebetrieb des Sensors 10 verwendet, sondern dient auch dazu, in einem Normalbetrieb des Sensors 10 die Messergebnisse 110 zu übertragen.

Die Anforderung 52 kann auch Konfigurationsdaten umfassen, woraufhin durch die Kommunikationseinheit 40 Sensorparameter, die zum Betrieb der einzelnen Komponenten des Sensors 10 erforderlich sind, geschrieben werden können. Umgekehrt ist die Kommunikationseinheit 40 eingerichtet, die Sensorparameter wieder auszulesen. In der Darstellung der Figur 1 ist das Lesen von Parametern mit dem Bezugszeichen 200 markiert. Das Schreiben von Parametern ist mit dem Bezugszeichen 202 markiert.

Des Weiteren ist aus Figur 1 zu erkennen, dass die Kommunikationseinheit 40 das digitale Messsignal 104 von dem Analog/Digitalwandler 22 erhält, dass die Kommunikationseinheit 40 das gefilterte digitale Messsignal 106 vom digitalen Filter 24 erhält und die Kommunikationseinheit 40 auch die Ergebnisse der weiteren Komponenten der Auswerteinheit 30 erhält. Diese Verbindungen sind jeweils mit einem gestrichelten Pfeil mit Bezugszeichen 201 markiert.

Die Kommunikationseinheit 40 des Sensors 10 ist somit in der Lage, alle digital vorliegenden Zwischenergebnisse, die zu dem Messergebnis 110 führen, abzugreifen und bei Erhalt einer Anforderung 52 als Diagnosedaten 54 über die digitale Kommunikationsschnittstelle, vergleiche Figur 2, zu übertragen. Des Weiteren ist die Kommunikationseinheit 40 eingerichtet, Betriebsparameter, insbesondere der Verstärker 14, 16 des Digital/Analogwandlers 18, des Analog/Digitalwandlers 22 sowie des Signalgenerators 20 auszulesen und neu zu schreiben.

Die einzelnen Komponenten des Sensors 10 können dabei zumindest teilweise in einer einzigen physikalischen Einheit realisiert sein. Beispielsweise können die einzelnen Einheiten der Auswerteinheit 30 in Form eines Computerprogrammprodukts realisiert sein, welches auf einer programmierbaren Computereinrichtung wie beispielsweise einem Mikrocontroller ausgeführt wird. Alternativ dazu könnte die Auswerteinheit 30 auch als ASIC (Application Specific Integrated Circuit) ausgestaltet sein.

In Figur 2 ist ein Fahrzeug 1 dargestellt, welches ein System 2 umfassend ein Steuergerät 60 sowie zwei der mit Bezug zu Figur 1 beschriebenen Sensoren 10 umfasst. Die beiden Sensoren 10 sind über eine digitale Kommunikationsschnittstelle 50, die beispielsweise als CAN-Bus 4 ausgestaltet ist, mit dem Steuergerät 60 verbunden.

Für das Durchführen einer Diagnose kann das Steuergerät 60 über den CAN-Bus 4 eine Anforderung 52 an einen der Sensoren 10 verschicken, woraufhin dieser von einem Normalbetrieb in den Diagnosebetrieb umschaltet. Für die weitere Übertragung von Daten wird daher eine erhöhte Datenrate verwendet. Der jeweilige Sensor 10 schickt dann Diagnosedaten 54, deren Zusammenstellung und Inhalt von der zuvor gesendeten Anforderung 52 an das Steuergerät 60 abhängig sind. Das Steuergerät 60 kann dann die erhaltenen Diagnosedaten 54 auswerten und gegebenenfalls mit Referenzdaten vergleichen. Werden Abweichungen von den Referenzdaten erkannt, kann auf einen Defekt des jeweiligen Sensors 10 geschlossen werden.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen. Insbesondere die Ausgestaltung der Auswerteinheit 30 kann dabei an die Erfordernisse des jeweiligen Sensors 10 angepasst sein.

## Patentansprüche

1. Sensor (10) umfassend mindestens einen Wandler (12) zum Aussenden von Signalen und zum Empfangen reflektierter Echosignale, der eingerichtet ist, ein analoges Messsignal (101) auszugeben, einen Analog/Digitalwandler (22) zum Umwandeln des analogen Messsignals (101, 102) in ein digitales Messsignal (104), eine Auswerteinheit (30) zum Auswerten des digitalen Messsignals (104) und eine Kommunikationseinheit (40) zum Übertragen eines von der Auswerteinheit (30) erzeugten Messergebnisses (110) über eine digitale Kommunikationsschnittstelle (50), wobei die Kommunikationseinheit (40) eingerichtet ist, über die digitale Kommunikationsschnittstelle (50) eine Anforderung (52) für Diagnosedaten (54) zu empfangen und ferner eingerichtet ist, den Sensor (10) in einen Diagnosebetrieb zu schalten und angeforderte Diagnosedaten (54) über die digitale Kommunikationsschnittstelle (50) zu übertragen, wobei die Kommunikationseinheit (40) eingerichtet ist, über die digitale Kommunikationsschnittstelle (50) mit mindestens zwei verschiedenen Datenraten zu kommunizieren, wobei zur Übertragung der Diagnosedaten (54) eine höhere Datenrate verwendet wird als für eine Übertragung des Messergebnisses (110) in einem Normalbetrieb des Sensors (10), **dadurch gekennzeichnet, dass** die Diagnosedaten (54) das digitale Messsignal (104), eine Hüllkurve des digitalen Messsignals (104) und/oder eine I/Q Demodulation des digitalen Messsignals (104) umfassen und/oder dass das digitale Messsignal (104) durch die Auswerteinheit (30) mit einem digitalen Filter (24) bearbeitet wird, wobei die Diagnosedaten (54) ein gefiltertes digitales Messsignal (106) umfassen und/oder dass die Auswerteinheit (30) eingerichtet ist, das digitale Messsignal (104) mit einem Referenzsignal zu korrelieren, wobei ein korreliertes Signal erzeugt wird und wobei die Diagnosedaten (54) Daten umfassen, die aus dem Referenzsignal, der Amplitude des korrelierten Signals, einem Maß der Übereinstimmung der Phasen zwischen dem Referenzsignal und dem digitalen Messsignal (104), oder einer Kombination mindestens zweier dieser Daten ausgewählt sind.

2. Sensor (10) nach Anspruch 1, **dadurch gekennzeichnet, dass** die Auswerteinheit (30) eingerichtet ist, lokale Maxima in dem digitalen Messsignal (104), in einem korrelierten Signal oder in einem gefilterten digitalen Messsignal (106) zu erkennen, wobei die Diagnosedaten (54) Parameter zu den erkannten Maxima umfassen.

3. Sensor (10) nach einem der Ansprüche 1 bis 2, **dadurch gekennzeichnet, dass** die Diagnosedaten (54) Sensorparameter umfassen.

4. Sensor (10) nach einem der Ansprüche 1 bis 3, **dadurch gekennzeichnet, dass** die Kommunikationseinheit (40) eingerichtet ist, Konfigurationsdaten zu empfangen und abhängig von den Konfigurationsdaten Sensorparameter zu konfigurieren.

5. Sensor (10) nach Anspruch 3 oder 4, **dadurch gekennzeichnet dass** die Sensorparameter ausgewählt sind aus einer Verstärkungskurve, einer Schwellwertkurve, einer Sendefrequenz, einer Sendewellenform, einer Samplerate des Analog/Digitalwandlers (22), einer Samplerate des Digital/Analogwandlers (18), Parametern des digitalen Filters (24) oder einer Kombination mindestens zweier dieser Sensorparameter

6. Sensor (10) nach einem der Ansprüche 1 bis 5, **dadurch gekennzeichnet, dass** die digitale Kommunikationsschnittstelle (50) als CAN-Bus (4), PSI5 Interface, strommodulierte Punkt-zu-Punkt Verbindung oder LIN Bus ausgestaltet ist.

7. Sensor (10) nach einem der Ansprüche 1 bis 6, **dadurch gekennzeichnet, dass** der Sensor (10) als Ultraschallsensor oder Radarsensor ausgebildet ist.

8. System (2) umfassend ein Steuergerät (60) und mindestens einen Sensor (10) nach einem der Ansprüche 1 bis 7, wobei das Steuergerät (60) und der mindestens eine Sensor (10) über eine digitale Kommunikationsschnittstelle (50) miteinander in Verbindung stehen, **dadurch gekennzeichnet, dass** das Steuergerät (60) eingerichtet ist, Diagnosedaten (54) von dem mindestens einen Sensor (10) anzufordern und auszuwerten.

## Claims

1. Sensor (10) comprising at least one transducer (12) for emitting signals and for receiving reflected echo signals, which transducer is configured to output an analogue measurement signal (101), an analogue/digital converter (22) for converting the analogue measurement signal (101, 102) into a digital measurement signal (104), an evaluation unit (30) for evaluating the digital measurement signal (104), and a communication unit (40) for transmitting a measurement result (110) generated by the evaluation unit (30) via a digital communication interface (50), wherein the communication unit (40) is configured to receive a request (52) for diagnostic data (54) via the digital communication interface (50) and is also configured to switch the sensor (10) to a diagnostic mode and to transmit requested diagnostic data (54) via the digital communication interface (50), wherein the communication unit (40) is configured to communicate at at least two different data rates via the digital communication interface (50), wherein a higher data rate is used to transmit the diagnostic data (54) than to transmit the measurement result (110) in a normal mode of the sensor (10), **characterized in that** the diagnostic data (54) comprise the digital measurement signal (104), an envelope of the digital measurement signal (104) and/or I/Q demodulation of the digital measurement signal (104), and/or **in that** the digital measurement signal (104) is processed by the evaluation unit (30) using a digital filter (24), wherein the diagnostic data (54) comprise a filtered digital measurement signal (106), and/or **in that** the evaluation unit (30) is configured to correlate the digital measurement signal (104) with a reference signal, wherein a correlated signal is generated, and wherein the diagnostic data (54) comprise data which are selected from the reference signal, the amplitude of the correlated signal, a degree of correspondence of the phases between the reference signal and the digital measurement signal (104) or a combination of at least two of these data items.

2. Sensor (10) according to Claim 1, **characterized in that** the evaluation unit (30) is configured to detect local maxima in the digital measurement signal (104), in a correlated signal or in a filtered digital measurement signal (106), wherein the diagnostic data (54) comprise parameters for the detected maxima.

3. Sensor (10) according to one of Claims 1 to 2, **characterized in that** the diagnostic data (54) comprise sensor parameters.

4. Sensor (10) according to one of Claims 1 to 3, **characterized in that** the communication unit (40) is configured to receive configuration data and to configure sensor parameters on the basis of the configuration data.

5. Sensor (10) according to Claim 3 or 4, **characterized in that** the sensor parameters are selected from a gain curve, a threshold value curve, a transmission frequency, a transmission waveform, a sample rate of the analogue/digital converter (22), a sample rate of the digital/analogue converter (18), parameters of the digital filter (24) or a combination of at least two of these sensor parameters.

6. Sensor (10) according to one of Claims 1 to 5, **characterized in that** the digital communication interface (50) is in the form of a CAN bus (4), a PSI5 interface, a current-modulated point-to-point connection or a LIN bus.

7. Sensor (10) according to one of Claims 1 to 6, **characterized in that** the sensor (10) is in the form of an ultrasonic sensor or a radar sensor.

8. System (2) comprising a control unit (60) and at least one sensor (10) according to one of Claims 1 to 7, wherein the control unit (60) and the at least one sensor (10) are connected to one another via a digital communication interface (50), **characterized in that** the control unit (60) is configured to request and evaluate diagnostic data (54) from the at least one sensor (10).

## Revendications

1. Capteur (10), comprenant au moins un transducteur (12) servant à émettre des signaux et à recevoir des signaux d'écho réfléchis, qui est conçu pour émettre un signal de mesure analogique (101), un convertisseur analogique/numérique (22) servant à convertir le signal de mesure analogique (101, 102) en un signal de mesure numérique (104), une unité d'évaluation (30) servant à évaluer le signal de mesure numérique (104), et une unité de communication (40) servant à transmettre par l'intermédiaire d'une interface de communication numérique (50) un résultat de mesure (110) généré par l'unité d'évaluation (30), l'unité de communication (40) étant conçue pour recevoir par l'intermédiaire de l'interface de communication numérique (50) une demande (52) de données de diagnostic (54), et étant en outre conçue pour commuter le capteur (10) dans un mode de diagnostic et pour transmettre des données de diagnostic demandées (54) par l'intermédiaire de l'interface de communication numérique (50), l'unité de communication (40) étant conçue pour communiquer par l'intermédiaire de l'interface de communication numérique (50) à au moins deux débits de données différents, un débit de données utilisé pour la transmission des données de diagnostic (54) étant supérieur à celui pour une transmission du résultat de mesure (110) en fonctionnement normal du capteur (10),
**caractérisé en ce que** les données de diagnostic (54) comprennent le signal de mesure numérique (104), une enveloppante du signal de mesure numérique (104) et/ou une démodulation I-Q du signal de mesure numérique (104), et/ou **en ce que** le signal de mesure numérique (104) est traité par l'unité d'évaluation (30) avec un filtre numérique (24), les données de diagnostic (54) comprenant un signal de mesure numérique filtré (106), et/ou **en ce que** l'unité d'évaluation (30) est conçue pour corréler le signal de mesure numérique (104) avec un signal de référence, un signal corrélé étant généré, et les données de diagnostic (54) comprenant des données qui sont sélectionnées parmi le signal de référence, l'amplitude du signal corrélé, une mesure de la concordance des phases entre le signal de référence et le signal de mesure numérique (104) ou une combinaison d'au moins deux de ces données.

2. Capteur (10) selon la revendication 1, **caractérisé en ce que** l'unité d'évaluation (30) est conçue pour reconnaître des maxima locaux dans le signal de mesure numérique (104), dans un signal corrélé ou dans un signal de mesure numérique filtré (106), les données de diagnostic (54) comprenant des paramètres concernant les maxima reconnus.

3. Capteur (10) selon l'une quelconque des revendications 1 et 2, **caractérisé en ce que** les données de diagnostic (54) comprennent des paramètres de capteur.

4. Capteur (10) selon l'une quelconque des revendications 1 à 3, **caractérisé en ce que** l'unité de communication (40) est conçue pour recevoir des données de configuration et pour configurer des paramètres de capteur en fonction des données de configuration.

5. Capteur (10) selon la revendication 3 ou 4, **caractérisé en ce que** les paramètres de capteur sont sélectionnés parmi une courbe d'amplification, une courbe de valeur seuil, une fréquence d'émission, une forme d'onde d'émission, un taux d'échantillonnage du convertisseur analogique/numérique (22), un taux d'échantillonnage du convertisseur numérique/analogique (18), des paramètres du filtre numérique (24) ou une combinaison d'au moins deux de ces paramètres de capteur.

6. Capteur (10) selon l'une quelconque des revendications 1 à 5, **caractérisé en ce que** l'interface de communication numérique (50) est agencée sous forme de bus CAN (4), d'interface PSI5, de liaison point à point à modulation de courant ou de bus LIN.

7. Capteur (10) selon l'une quelconque des revendications 1 à 6, **caractérisé en ce que** le capteur (10) est réalisé sous forme de capteur à ultrasons ou de capteur radar.

8. Système (2), comprenant un appareil de commande (60) et au moins un capteur (10) selon l'une quelconque des revendications 1 à 7, dans lequel l'appareil de commande (60) et ledit au moins un capteur (10) sont en communication l'un avec l'autre par l'intermédiaire d'une interface de communication numérique (50), **caractérisé en ce que** l'appareil de commande (60) est conçu pour demander et évaluer des données de diagnostic (54) de l'au moins un capteur (10).
